# EUROPÄISCHE PATENTSCHRIFT

(11) **EP 3 651 289 B1**
(45) Veröffentlichungstag und Bekanntmachung des Hinweises auf die Patenterteilung: **03.06.2026**
(21) Anmeldenummer: 19205188.6
(22) Anmeldetag: 24.10.2019
(51) Int. Cl.: H01R 43/052, H01R 13/66

(54) **GREIFVORRICHTUNG ZUM VONEINANDER UNABHÄNGIGEN GREIFEN ZWEIER LEITER**
GRIPPING DEVICE FOR CONNECTING TWO CONDUCTORS INDEPENDENT OF EACH OTHER
DISPOSITIF DE PRÉHENSION PERMETTANT D'APPRÉHENDER DEUX CONDUITES L'UNE INDÉPENDAMMENT DE L'AUTRE

(30) Priorität: 08.11.2018 DE 102018127974
(43) Veröffentlichungstag der Anmeldung: 13.05.2020
(73) Patentinhaber: Kromberg & Schubert Automotive GmbH & Co. KG, 71272 Renningen (DE)
(72) Erfinder: Stahl, Marvin, 71229 Leonberg (DE)
(74) Vertreter: Staeger & Sperling Partnerschaftsgesellschaft mbB

(56) Entgegenhaltungen:
- EP-A1- 1 342 248
- EP-A1- 3 012 841
- DE-A1- 2 802 991
- JP-A- 2017 185 606
- US-A- 2 876 452
- US-A- 5 850 694
- US-A1- 2004 070 131
- US-A1- 2008 256 792

## Beschreibung

Die Erfindung betrifft eine Greifvorrichtung zum voneinander unabhängigen Greifen zweier benachbarter Leiter, die vorzugsweise zumindest abschnittsweise miteinander verbunden und insbesondere miteinander verdrillt sind, sowie ein zugehöriges Verfahren zur Durchführung einer Prüfung einer Steckverbindung.

Aus dem Stand der Technik ist bereits eine Vielzahl von Greifvorrichtungen für das Greifen von elektrisch leitfähigen Leitungen bekannt. Zumeist ermöglichen die vorbekannten Greifvorrichtungen jedoch lediglich das Greifen einer einzelnen Leitung bzw. eines einzelnen Leiters. Bei der Montage und bei nachfolgenden Prüfverfahren bzw. bei der gemeinsamen Handhabung zweier benachbarter Leiter, die vorzugsweise miteinander verdrillt sind, ist es jedoch nicht möglich, die Leiter vollkommen unabhängig voneinander zu greifen und zu bewegen, da die Verdrillung der Leiter miteinander erhalten werden soll und die Leiter miteinander als Einheit montiert, getestet oder allgemein gehandhabt werden sollen.

Zudem ist es mit den vorbekannten Greifvorrichtungen zumeist nicht möglich, Prüfungsverfahren an den einzelnen Leitern durchzuführen, da aufgrund der Verdrillung der Leiter beide Leiter gemeinsam gegriffen werden müssen.

Hinzukommt, dass die meisten Greifvorrichtungen aufgrund ihrer geometrischen Ausführung nicht geeignet sind Leiter mit einem geringem Durchmesser aufzunehmen, welche zwischen weiteren Leitern angeordnet sind.

Verschiedene Greifvorrichtungen sowie entsprechende Verfahren sind beispielsweise aus den Dokumenten US 2008/256792 A1, DE 28 02 991 A1, EP 1 342 248 A1, US 5 850 694 A, US 2 876 452 A und JP 2017 185606 A bekannt. Diese lehren jedoch zumeist Greifvorrichtungen mit Greifbacken, welche nicht unabhängig voneinander bewegbar sind. Weiter ist aus der EP 3 012 841 A1 eine Greifvorrichtung zum voneinander unabhängigen Greifen zweier benachbarter Leiter bekannt, bei welcher jedoch vier bewegliche Greifbacken zum Greifen der zwei Leiter notwendig sind.

Der Erfindung liegt deshalb die Aufgabe zugrunde, die vorgenannten Nachteile zu überwinden und eine Greifvorrichtung sowie ein zugehöriges Verfahren bereitzustellen, mit welcher zwei vorzugsweise miteinander verdrillte Leiter einzeln gegriffen werden können.

Diese Aufgabe wird durch die Merkmalskombination gemäß Patentanspruch 1 gelöst.

Erfindungsgemäß wird eine Greifvorrichtung zum voneinander unabhängigen Greifen zweier benachbarter Leiter vorgeschlagen. Die Greifvorrichtung weist hierzu eine erste und eine zweite Greifbacke sowie eine Mittelbacke auf. Die Mittelbacke erstreckt sich zwischen der ersten und zweiten Greifbacke stegförmig entlang einer Längsachse. Die erste und die zweite Greifbacke sind jeweils entlang einer zu der Längsachse orthogonalen Querachse und entlang der Querachse von der Mittelbacke weg oder auf die Mittelbacke zu verschiebbar. Ferner bildet die erste Greifbacke einen zu der Mittelbacke weisenden ersten Greifabschnitt und die Mittelbacke einen zu der ersten Greifbacke weisenden ersten Gegenhalteabschnitt aus. Der erste Greifabschnitt und der erste Gegenhalteabschnitt liegen einander gegenüber und sind ausgebildet, gemeinsam durch eine Verschiebbarkeit der ersten Greifbacke einen ersten Leiter der zwei Leiter zu greifen. Analog gilt für die zweite Greifbacke, dass die zweite Greifbacke einen zu der Mittelbacke weisenden zweiten Greifabschnitt und die Mittelbacke einen zu der zweiten Greifbacke weisenden zweiten Gegenhalteabschnitt ausbildet. Der zweite Greifabschnitt und der zweite Gegenhalteabschnitt liegen einander ebenfalls gegenüber und sind ausgebildet, gemeinsam durch eine Verschiebbarkeit der zweiten Greifbacke einen zweiten Leiter der zwei Leiter zu greifen.

Durch die zwei verschiebbaren Greifbacken mit der dazwischen liegenden Mittelbacke, können die Leiter einzeln gegriffen werden, wobei durch die gemeinsame, stegförmige Mittelbacke das Aufnehmen und Greifen der beiden Leiter auf engsten Raum möglich ist. Die Leiter können somit gegriffen und beispielsweise in ein jeweiliges Kontaktelement eingesteckt bzw. montiert werden. Bei einem nachfolgenden Prüfverfahren kann dann eine Greifbacken-Paarung aus der ersten oder zweiten Greifbacke und der Mittelbacke den Griff um einen Leiter lösen und die jeweils andere Greifbacken-Paarung an dem Leiter, welcher gegriffen ist, einer Kraftprüfung, wie beispielsweise einem "Pull"-Test unterzogen werden. Dabei wird der jeweils gegriffene Leiter durch die Greifvorrichtung mit einer vorbestimmten Zugkraft beaufschlagt und der Zugkraftverlauf entlang des Leiters oder die Bewegung der Greifvorrichtung gemessen, um zu ermitteln ob der jeweilige Leiter in dem zugehörigen Kontaktelement und/oder das jeweilige Kontaktelement in einem zugehörigen Kontaktträger mit einer vorbestimmten Kraft gehalten wird. Nach der Durchführung eines Prüfverfahrens an einem ersten Leiter der beiden Leiter kann durch einfaches Umgreifen, also dem Greifen des zweiten Leiters durch die Greifvorrichtung und dem Lösen des Griffs von dem ersten Leiter durch die Greifvorrichtung, die Prüfung für den zweiten Leiter wiederholt werden.

Die zwei benachbarten Leiter sind bei einer Variante zumindest abschnittsweise und insbesondere durch eine Verdrillung miteinander verbunden. Die Greifvorrichtung ist daher vorteilhafterweise durch die erste und die zweite Greifbacke sowie die dazwischen angeordnete Mittelbacke ausgebildet, die miteinander verbundenen Leiter unabhängig voneinander zu greifen und mit der Greifvorrichtung unabhängig voneinander zu bewegen.

Vorzugsweise ist zudem vorgesehen, dass die Mittelbacke in ihrem Querschnitt orthogonal zu der Längsachse T-förmig ausgebildet ist, um die Mittelbacke zu versteifen und belastbarer auszubilden. Der sich entlang einer Symmetrielinie der T-Form erstreckende Abschnitt liegt dabei vorzugsweise zwischen der ersten und zweiten Greifbacke und der zu der Symmetrielinie querverlaufende Abschnitt liegt zu der ersten und zweiten Greifbacke versetzt, so dass die Bewegung bzw. die Beweglichkeit der ersten und zweiten Greifbacke nicht durch den querverlaufenden Abschnitt gestört oder behindert wird.

Eine vorteilhafte Ausführungsform sieht darüber hinaus vor, dass der erste Greifabschnitt und der erste Gegenhalteabschnitt jeweils eine Ausnehmung mit einer teilkreis- oder bogenförmigen Außenkontur aufweisen. Die teilkreis- oder bogenförmigen Ausnehmungen des ersten Greifabschnitts und des ersten Gegenhalteabschnitts bilden gemeinsam eine zu dem ersten Leiter korrespondierende erste Aufnahmeausnehmung. Analog gilt, dass der zweite Greifabschnitt und der zweite Gegenhalteabschnitt jeweils eine Ausnehmung mit einer teilkreis- oder bogenförmigen Außenkontur aufweisen und die teilkreis- oder bogenförmigen Ausnehmungen des zweiten Greifabschnitts und des zweiten Gegenhalteabschnitts gemeinsam eine zu dem zweiten Leiter korrespondierende zweite Aufnahmeausnehmung bilden. Durch die teilkreis- oder bogenförmigen Außenkonturen, durch welche die erste und die zweite Aufnahmeausnehmung jeweils gebildet werden, korrespondieren die Aufnahmeausnehmungen zu einer Querschnittsform des jeweiligen Leiters, welche im Wesentlichen rund sind. Die Leiter liegen dadurch mit einer großen Auflagefläche in den Aufnahmeausnehmungen an den Greifbacken und an der Mittelbacke an, so dass die Leiter von der Greifvorrichtung mit einer hohen, sich über die Auflagefläche verteilenden Haltekraft gegriffen werden können, ohne die Leiter durch punktuell wirkende Greifkräfte zu verformen oder zu quetschen.

Die erste Aufnahmeausnehmung und die zweite Aufnahmeausnehmung sind bei einer ebenfalls vorteilhaften Variante der Greifvorrichtung jeweils auf einer entlang der Längsachse von der ersten und zweiten Greifbacke sowie von der Mittelbacke weg weisenden Seite geöffnet. Durch die Öffnung ist es nicht notwendig, die Greifbacken jeweils um die gesamte Breite bzw. um den Durchmesser des jeweils aufzunehmenden Leiters zu verschieben, da die Strecke, um welche die jeweilige Greifbacke verschoben werden muss, um die Breite der Öffnung entlang der Querachse reduziert wird. Durch die Aufnahmeausnehmung wird ein jeweils in ihr aufgenommener Leiter dennoch zumindest zum Teil umgriffen, so dass der jeweilige Leiter sich in einer Greifstellung der Greifbacken-Paarung, in welcher die jeweilige Greifbacke zu der Mittelbacke hin verschoben ist, sich nicht aus der Aufnahmeausnehmung lösen kann.

Um die zwei vorzugsweise miteinander verbundenen bzw. verdrillten Leiter einzeln einfacher greifen zu können, sieht eine ebenfalls vorteilhafte Weiterbildung vor, dass die erste Greifbacke an dem ersten Greifabschnitt eine erste Leiter-Einführhilfe aufweist, die zweite Greifbacke an dem zweiten Greifabschnitt eine zweite Leiter-Einführhilfe aufweist und die Mittelbacke an dem ersten und dem zweiten Gegenhalteabschnitt eine mittlere Leiter-Einführhilfe aufweist. Die erste, die zweite und die mittlere Leiter-Einführhilfe ist jeweils als ein sich zu der Längsachse parallel erstreckender, sich entlang der Längsachse verjüngender keilförmiger Vorsprung ausgebildet. Durch die Keilform der mittleren Leiter-Einführhilfe kann sich die Mittelbacke beim Anordnen der Greifvorrichtung an den zwei benachbarten und vorzugsweise miteinander verdrillten Leitern bzw. beim Aufnahmen der zwei benachbarten und vorzugsweise miteinander verdrillten Leiter zwischen die beiden Leiter schieben. Sind die beiden vorzugsweise miteinander verdrillten Leiter zudem benachbart zu weiteren Leitern angeordnet, kann sich die Greifvorrichtung durch die erste und zweite Leiter-Einführhilfe zwischen die weiteren Leiter und die vorzugsweise miteinander verdrillten Leiter schieben und die beiden vorzugsweise miteinander verdrillten Leiter einfacher aufnehmen.

Eine vorteilhafte Ausbildung der Greifvorrichtung sieht zudem vor, dass die erste Leiter-Einführhilfe und die mittlere Leiter-Einführhilfe jeweils eine zu der ersten Aufnahmeausnehmung führende und gegenüber der Längsachse schräge Führungsfläche aufweist. Darüber hinaus weist die zweite Leiter-Einführhilfe und die mittlere Leiter-Einführhilfe jeweils eine zu der zweiten Aufnahmeausnehmung führende und gegenüber der Längsachse schräge Führungsfläche auf. Wurden die Leiter durch die jeweiligen Einführhilfen separiert, wird der jeweilige Leiter durch die jeweiligen Führungsflächen zentriert und in die jeweilige Aufnahmeausnehmung geführt.

Um die Greifvorrichtung beispielsweise auf andere zu greifende Leiter anzupassen, sieht eine ebenfalls vorteilhafte Variante vor, dass die erste Greifbacke und die zweite Greifbacke jeweils mehrteilig aus einem Greifeinsatz mit dem jeweiligen Greifabschnitt und einer Einsatzaufnahme ausgebildet ist. Die Greifeinsätze sind beispielsweise über Schrauben oder andere Fixiervorrichtungen an der Einsatzaufnahme befestigt und können schnell und einfach gegen andere Greifeinsätze ausgetauscht werden. Ebenso kann die Mittelbacke gegen eine andere Mittelbacke getauscht werden, um eine beschädigte Mittelbacke auszutauschen oder die Greifvorrichtung beispielsweise auf andere zu greifende Leiter anzupassen.

Zur Bewegung der Greifbacken ist erfindungsgemäß zudem ein erster Aktor und ein zweiter Aktor, wie beispielsweise Elektro- bzw. Linearmotoren, vorgesehen. Der erste Aktor ist mit der ersten Greifbacke verbunden und ausgebildet, die erste Greifbacke entlang der Querachse zu verschieben. Analog ist der zweite Aktor mit der zweiten Greifbacke verbunden und ausgebildet, die zweite Greifbacke entlang der Querachse zu verschieben. Durch die zwei Aktoren sind die beiden Greifbacken, also die erste und die zweite Greifbacke, unabhängig voneinander bewegbar und der jeweilige Leiter durch die jeweilige Greifbacken-Paarung aus einer der Greifbacken und der Mittelbacke greifbar.

Vorzugsweise wird die Greifvorrichtung an einem Handhabungsgerät, wie beispielsweise einem Roboter fixiert, von welchem die Greifvorrichtung bewegt werden kann. Hierzu sieht eine vorteilhafte Ausführungsvariante vor, dass die Greifvorrichtung ferner eine Anbindungsplatte zur Befestigung der Greifvorrichtung an einem bzw. dem Handhabungsgerät umfasst. Ferner umfasst die Greifvorrichtung eine an der Anbindungsplatte fixierte Aufnahmevorrichtung, an welchem der erste und der zweite Aktor sowie die Mittelbacke fixiert sind.

Die Greifvorrichtung umfasst bei einer weiteren vorteilhaften Weiterbildung ferner einen Kraftmomentensensor zur Bestimmung von an den ersten und zweiten Greifbacken sowie an dem Mittelbacke angreifenden Kräften und Momenten, die über einen gegriffenen Leiter oder beide gegriffene Leiter durch eine Bewegung der Greifvorrichtung auf die Greifvorrichtung wirken. Der Kraftmomentensensor ist darüber hinaus an der Greifvorrichtung und vorzugsweise zwischen dem Handhabungsgerät und der Anbindungsplatte fixiert.

Um mit der Greifvorrichtung zwei Leiter zu greifen, die benachbart zueinander und vorzugsweise miteinander verdrillt sind, wird die Greifvorrichtung mit der Mittelbacke zwischen die zwei Leiter geführt. Hierzu eignet sich insbesondere ein Abschnitt der Leiter, in welchem die Mittelachsen der Leiter, welche jeweils durch den Mittelpunkt des Querschnitts verläuft, in einer Ebene liegen, die parallel zu der Querachse ist. Die Greifvorrichtung wird um eine vorbestimmte Strecke entlang ihrer Längsachse mit der Mittelbacke zwischen den Leitern zu den Leitern hin verschoben, so dass diese vorzugsweise geführt durch die Führungsflächen in die Aufnahmeausnehmungen hinein gleiten. Dabei werden ein erster Leiter in der ersten Aufnahmeausnehmung und ein zweiter Leiter in der zweiten Aufnahmeausnehmung angeordnet. Zum Greifen der Leiter wird die erste Greifbacke zu der Mittelbacke verschoben und der erste Leiter der zwei Leiter von der ersten Greifbacke und dem Mittelbacke gegriffen. Analog wird der zweite Leiter gegriffen, in dem die zweite Greifbacke zu dem Mittelbacke verschoben und der zweiter Leiter der zwei Leiter von der zweiten Greifbacke und dem Mittelbacke gegriffen wird. Soll nur an einem der beiden Leiter eine Prüfkraft bzw. eine Kraft durch die Greifvorrichtung aufgebracht werden, wird der Griff des jeweils anderen Leiters gelöst, in dem die jeweilige Greifbake von der Mittelbacke entlang der Querachse weg verschoben wird.

Eine vorteilhafte Ausführung sieht zudem eine Bilderfassungseinrichtung vor, mit welcher die zwei Leiter erfasst werden können um für das Greifen durch die Greifvorrichtdung eine geeignete Greifposition zu ermitteln, in welcher die beiden Leiter bzw. die zugreifenden Leiterabschnitte der Leiter parallel nebeneinander und mit ihrer jeweiligen Längsachse in einer zu der Längsachse orthogonalen Ebene liegen.

Ein weiterer Aspekt der Erfindung betrifft zudem ein Verfahren zum Prüfen einer Steckverbindung zwischen zwei benachbart zueinander angeordneten und vorzugsweise miteinander verdrillten Leitern und einem jeweiligen in einem Kontaktträger montierten Kontaktelement mit einer erfindungsgemäßen Greifvorrichtung, welche zudem wie beschrieben einen Kraftmomentensensor aufweist. Die zwei Leiter weisen entlang einer gemeinsamen Längsrichtung drei Abschnitte auf. Diese sind ein erster Abschnitt, in welchem die zwei Leiter parallel und quer zu ihrer Längserstreckung beabstandet zueinander angeordnet sind und jeweils in eine je einem Kontaktelement zugeordneten Kontaktkammer eingesteckt sind, ein dritter Abschnitt, in welchem die zwei Leiter miteinander und benachbart zueinander angeordnet sind, und ein zweiter, zwischen dem ersten und dem dritten Abschnitt liegenden Abschnitt, wobei die Leiter in dem zweiten Abschnitt von ihrer Anordnung im ersten Abschnitt in ihre Anordnung im dritten Abschnitt übergehen. Der zweite Abschnitt liegt darüber hinaus vorzugsweise unmittelbar benachbart zu den Kontaktkammern bzw. zu dem Kontaktträger, in welchem die Kontakte montiert sind. Zur Durchführung des Verfahrens wird die Greifvorrichtung mit der Mittelbacke zwischen die zwei Leiter geführt. Anschließend wird einer der zwei Leiter von der ersten oder zweiten Greifbacke und der Mittelbacke der Greifvorrichtung in dem zweiten oder dritten Abschnitt des jeweiligen Leiters gegriffen. Nachfolgend wird die Greifvorrichtung mit dem gegriffenen Leiter in einer geradlinigen Streckbewegung mit einer vorbestimmten Kraft entlang einer vorbestimmten Strecke oder in eine vorbestimmte Richtung von dem ersten Abschnitt der Leiter weg bewegt. Ein Zugkraftverlauf einer entlang des gegriffenen Leiters wirkenden Zugkraft während der Streckbewegung wird mittels dem Kraftmomentensensor an der Greifvorrichtung gemessen. Aus einem Messwert des an der Greifvorrichtung gemessenen Zugkraftverlaufs wird anschließend bestimmt, ob der Leiter mit einer vorbestimmten Haltekraft mit dem jeweiligen Kontaktelement verbunden ist und/oder ob das zugehörige Kontaktelement mit einer vorbestimmten Montagekraft in dem Kontaktträger montiert ist.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Greifvorrichtung mit beidseitig geöffneten Greifbacken;
- Fig. 2: beidseitig geschlossene Greifbacken einer Greifvorrichtung;
- Fig. 3: Greifbacken einer Greifvorrichtung, wobei die erste Greifbacken-Paarung geöffnet ist;
- Fig. 4: Greifbacken einer Greifvorrichtung, wobei die zweite Greifbacken-Paarung geöffnet ist.

Die Figuren sind beispielhaft schematisch. Gleiche Bezugszeichen in den Figuren weisen auf gleiche funktionale und/oder strukturelle Merkmale hin.

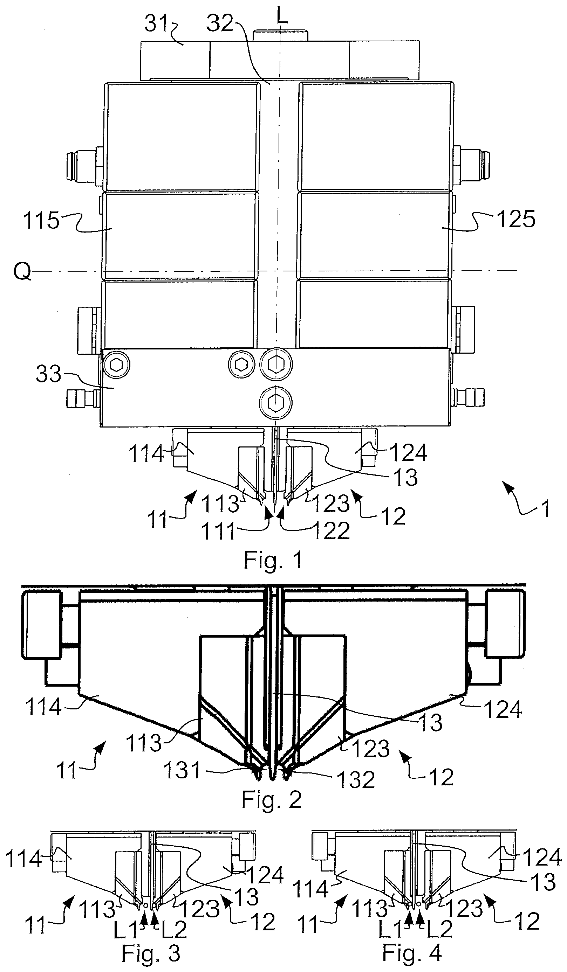

Figur 1 zeigt eine Greifvorrichtung 1 mit der Anbindungsplatte 31, einer Aufnahmevorrichtung, bestehend aus einem Längselement 32 und einem Querelement 33, einer an dem Längs- oder Querelement 32, 33 befestigten Mittelbacke 13, zwei an dem Querelement 33 befestigten Aktoren 115, 125 sowie pro Aktor 115, 125 jeweils eine Greifbacke 11, 12. Die Greifvorrichtung 1 kann über die Anbindungsplatte 31 an einem Handhabungsgerät, wie beispielsweise einem nicht gezeigten Roboter, angeordnet bzw. montiert sein, wobei an der Anbindungsplatte 31 und zwischen der Anbindungsplatte 31 und dem Handhabungsgerät ein Kraftmomentensensor angeordnet sein kann, um von außen auf die Greifvorrichtung 1 wirkende Kräfte und Momente messen bzw. erfassen zu können. Der erste und zweite Aktor 115, 125 sind bei dem gezeigten Ausführungsbeispiel durch Schrauben an dem Querelement 33 fixiert, welches selbst unmittelbar oder über ein zwischen dem Quer- und Längselement 32, 33 angeordnetes Verbindungselement an dem Längselement 32, 33 fixiert ist. Das Längselement 32 der Aufnahmevorrichtung erstreckt sich entlang der Längsachse L und das Querelement 33 entlang der Querachse Q, wobei das Verbindungselement sich im Wesentlichen orthogonal zu der Längsachse L und der Querachse Q erstreckt und bei der in Figur 1 gezeigten Ansicht von dem Querelement 33 verdeckt wird. Die Mittelbacke 13 kann an dem Längs- oder Querelement 32, 33 fixiert sein oder alternativ integral mit dem Verbindungselement ausgebildet sein. An dem ersten Aktor 115 ist die erste Greifbacke 11 fixiert, welche durch den ersten Aktor 115 entlang der Querachse Q verschiebbar ist, und an dem zweiten Aktor 125 ist die zweite Greifbacke 12 fixiert, welche durch den zweiten Aktor 125 entlang der Querachse Q verschiebbar ist. Die Aktoren 115, 125 sind ausgebildet die Greifbacken 11, 12 unabhängig voneinander zu verschieben bzw. zu bewegen.

Die Mittelbacke 13 ist vorzugsweise positionsfest und im Wesentlichen starr ausgebildet.

Der erste Aktor 115 ist hierbei insbesondere ausgebildet, die erste Greifbacke 11 von einer ersten Greifbackenposition in eine zweite Greifbackenposition zu verschieben, wobei die erste Greifbacke 11 in der zweiten Greifbackenposition einen Abstand entlang der Querachse Q zu der Mittelbacke 13 aufweist, der größer ist, als ein Abstand entlang der Querachse Q der ersten Greifbacke 11 zu der Mittelbacke 13 in der ersten Greifbackenposition.

Analog ist der zweite Aktor 125 insbesondere ausgebildet, die zweite Greifbacke 12 von einer ersten Greifbackenposition in eine zweite Greifbackenposition zu verschieben, wobei die zweite Greifbacke 12 in der zweiten Greifbackenposition einen Abstand entlang der Querachse Q zu der Mittelbacke 13 aufweist, der größer ist, als ein Abstand entlang der Querachse Q der zweiten Greifbacke 12 zu der Mittelbacke 13 in der ersten Greifbackenposition.

In Figur 1 ist die erste Greifbacke 11 in ihrer zweiten Greifbackenposition und die zweite Greifbacke 12 in ihrer zweiten Greifbackenposition dargestellt, der sich daraus ergebende Abstand der ersten und zweiten Greifbacken 11, 12 zu der Mittelbacke 13 ermöglich jeweils die Anordnung bzw. Aufnahme eines Leiters zwischen der ersten Greifbacke 11 und der Mittelbacke 13 und der zweiten Greifbacke 12 und der Mittelbacke 13.

Die erste und zweite Greifbacke 11, 12 sind bei der dargestellten Ausbildungsvariante jeweils zweiteilig aus einer jeweiligen Einsatzaufnahme 114, 124, die mit dem jeweiligen Aktor 115, 125 verbunden ist, und einem jeweiligen Greifeinsatz 113, 123 ausgebildet, der durch zumindest eine Schraube an der jeweiligen Einsatzaufnahme 114, 124 fixiert ist. Da die Leiter beim Greifen jeweils an den Greifeinsätzen 113, 123 und an der Mittelbacke 13 anliegen, können die Greifeinsätze 113, 123 sowie die Mittelbacke 13 bei einem Verschleiß oder einer Änderung der Geometrie der zugreifenden Leiter einfach, schnell und effektiv ausgetauscht werden.

Durch die Geometrie der Greifbacken 11, 12 bzw. durch die Geometrie der Greifeinsätze 113, 123 sowie durch die Geometrie der Mittelbacke 13 wird das Greifen bzw. Aufnehmen der Leiter L1, L2 durch die Greifvorrichtung 1 besonders leicht bzw. vorteilhaft ermöglicht. Dazu weisen die Greifbacken 11, 12 und die Mittelbacke 13 an ihrem entlang der Längsachse L von den Aktoren 115, 125 weg weisenden endseitigen Endabschnitten jeweils eine Leiter-Einführhilfe auf, welche durch ihre sich entlang der Längsachse L von den Aktoren 115, 125 weg verjüngende Keilform gekennzeichnet sind. An der ersten Greifbacke 11 bzw. an dem Greifeinsatz 113 der ersten Greifbacke 11 ist an dem endseitigen Endabschnitt ein Vorsprung ausgebildet, welcher die erste Leiter-Einführhilfe bildet. Analog ist an der zweiten Greifbacke 12 bzw. an dem Greifeinsatz 123 der zweiten Greifbacke 12 an dem endseitigen Endabschnitt ein Vorsprung ausgebildet, welcher die zweite Leiter-Einführhilfe bildet. Die Mittelbacke 13 weist ebenfalls einen sich verjüngenden Vorsprung an ihrem von den Aktoren 115, 125 weg weisenden endseitigen Endabschnitt auf, welcher die mittlere Leiter-Einführhilfe bildet. Durch die mittlere Leiter-Einführhilfe kann die Greifvorrichtung zwischen die zu greifenden Leiter geschoben werden. Sind diese nebeneinander angeordnet, kann sich die mittlere Leiter-Einführhilfe durch die Keilform bei einer Bewegung der Greifvorrichtung 1, beispielsweise mittels des Handhabungsgeräts, zwischen die Leiter schieben und diese voneinander trennen. Sind die beiden zu greifenden Leiter L1, L2 zudem benachbart zu anderen Leitern angeordnet, kann sich die Greifvorrichtung 1 mit der ersten und zweiten Leiter-Einführhilfe jeweils zwischen einen der zu greifenden Leiter L1, L2 und zu diesen benachbarte Leiter schieben, so dass die zu greifenden Leiter L1, L2 von den weiteren Leitern separiert sind.

Der erste Leiter L1 der beiden zu greifenden Leiter L1, L2 wird von der Greifvorrichtung 1 durch einen ersten Greifabschnitt 111 an der ersten Greifbacke 11 bzw. an dem ersten Greifeinsatz 113 und einem ersten Gegenhalteabschnitt 131 an der Mittelbacke 13 gegriffen. Zum Greifen des ersten Leiters L1 wird die erste Greifbacke 11 durch den ersten Aktor 115 von ihrer zweiten Greifbackenposition auf ihre erste Greifbackenposition verschoben, in welcher die erste Greifbacke 11 mit dem ersten Greifabschnitt 111 und die Mittelbacke 13 mit ihrem ersten Gegenhalteabschnitt 131 an dem ersten Leiter L1 anliegen.

Analog gilt für den zweiten Leiter L2, dass der zweite Leiter L2 der beiden zu greifenden Leiter L1, L2 von der Greifvorrichtung 1 durch einen zweiten Greifabschnitt 122 an der zweiten Greifbacke 12 bzw. an dem zweiten Greifeinsatz 123 und einem zweiten Gegenhalteabschnitt 132 an der Mittelbacke 13 gegriffen wird. Zum Greifen des zweiten Leiters L2 wird die zweite Greifbacke 12 durch den zweiten Aktor 125 von ihrer zweiten Greifbackenposition auf ihre erste Greifbackenposition verschoben, in welcher die zweite Greifbacke 12 mit dem zweiten Greifabschnitt 122 und die Mittelbacke 13 mit ihrem zweiten Gegenhalteabschnitt 132 an dem zweiten Leiter L2 anliegen.

Um die durch die Aktoren 115, 125 über die beiden Greifbacken 11, 12 auf die beiden Leiter L1, L2 aufgebrachten Greifkräfte über eine möglichst große Fläche verteilen zu können, so dass die Greifkräfte nicht punktuell bzw. über einen kleinen Bereich wirken und die Leiter L1, L2 möglichst nicht oder nur minimal verformt werden, sieht die gezeigte Ausführungsform vor, dass der erste und der zweite Greifabschnitt 111, 122 sowie der erste und der zweite Gegenhalteabschnitt 131, 132 jeweils eine Ausnehmung mit einer teilkreisförmigen Außenkontur aufweisen.

Dadurch wird durch den ersten Greifabschnitt 111 und den ersten Gegenhalteabschnitt 131 eine erste Aufnahmeausnehmung für den ersten Leiter L1 gebildet, der eine im Wesentliche zu dem ersten Leiter L1 korrespondierende Form aufweist, so dass die erste Greifbacke 11 und die Mittelbacke 13 jeweils über einen Umfangsabschnitt des ersten Leiters L1 an dem ersten Leiter L1 anliegen und die durch den ersten Aktor 115 aufgebrachten Greifkräfte über den Umfangsabschnitt gleichmäßig auf den ersten Leiter L1 verteilt werden, wenn die erste Greifbacke 11 in ihre erste Greifbackenposition verschoben wird bzw. verschoben ist.

Für die durch den zweiten Greifabschnitt 122 und den zweiten Gegenhalteabschnitt 132 gebildete zweite Aufnahmeausnehmung gilt für den zweiten Leiter L2 analog das selbige.

Um sicherzustellen, dass der jeweilige Leiter L1, L2 nach dem Anordnen der Mittelbacke 13 mit der mittleren Leiter-Einführhilfe zwischen den beiden Leitern L1, L2 und dem Anordnen der ersten und zweiten Einführhilfe benachbart zu jeweils einem der beiden Leiter L1, L2 in einer jeweils vorbestimmten Position in der jeweiligen Aufnahmeausnehmung angeordnet wird, ist an den Leiter-Einführhilfen jeweils eine zu dem zugehörigen Greifabschnitt 111, 122 bzw. dem zugehörigen Gegenhalteabschnitt 131, 132 führende Führungsfläche vorgesehen. Die Führungsfläche ist jeweils gegenüber der Längsachse L schräg ausgebildet, so dass der jeweilige Leiter L1, L2 von der jeweiligen Leiter-Einführhilfe entlang der Führungsflächen in die Aufnahmeausnehmung gleiten bzw. geführt werden kann.

Die Aufnahmeausnehmungen bilden, wie bei der dargestellten Ausführungsform, auch mit den Greifbacken 11, 12 in ihrer jeweiligen ersten Greifbackenposition keine vollständig geschlossene Kreisform, sondern weisen eine entlang der Längsachse L von den Aktoren 115, 125 weg weisende Öffnung auf. Durch die Öffnung wird ein Aufnahmekorridor gebildet, durch welchen der jeweilige Leiter L1, L2 in die jeweilige Aufnahmeausnehmung eingeführt werden kann. Der Aufnahmekorridor muss zur Aufnahme eines Leiters mit den Greifbacken 11, 12 in ihrer jeweils zweiten Greifbackenposition zumindest eine Breite entlang der Querachse aufweisen, welche zumindest dem Durchmesser des aufzunehmenden Leiters entspricht. Dadurch, dass der Aufnahmekorridor auch mit den Greifbacken 11, 12 in ihrer jeweils ersten Greifbackenposition nicht vollständig geschlossen wird, müssen die Greifbacken 11, 12 von ihrem jeweiligen Aktor 115, 125 über eine reduzierte Strecke entlang der Querachse Q verschoben werden, um die Breite des Aufnahmekorridors zu erreichen, mit welchem der jeweilige Leiter aufgenommen werden kann. Um den Leiter mit der jeweiligen Greifbacke sicher greifen zu können ist jedoch vorgesehen, dass der Aufnahmekorridor mit der jeweiligen Greifbacke in seiner ersten Greifbackenposition eine Breite kleiner dem Durchmesser des jeweiligen Leiters aufweist.

Figur 2 zeigt ausschnittsweise die Greifvorrichtung 1 aus Figur 1, wobei die Greifbacken 11, 12 beide von ihrem jeweiligen Aktor 115, 125 in ihre jeweils erste d.h. zu der Mittelbacke 13 hin verschobene Greifbackenposition verschoben sind.

Aus Gründen der Übersichtlichkeit sind in Figur 1 der erste und zweite Greifabschnitt 111, 122 mit Bezugszeichen versehen, jedoch nicht der erste und zweite Gegenhalteabschnitt 131, 132. In Figur 2 sind dahingegen der erste und zweite Gegenhalteabschnitt 131, 132 mit Bezugszeichen versehen, nicht jedoch der erste und zweite Greifabschnitt 111, 122. Sowohl die Greifabschnitte 111, 122 als auch die Gegenhalteabschnitte 131, 132 sind in den Figuren 1 bis 4 vorhanden, jedoch lediglich zur verbesserten Lesbarkeit nicht bzw. nicht vollständig bezeichnet.

Die Figuren 3 und 4 zeigen jeweils einen Ausschnitt der Greifvorrichtung 1 aus Figur 1, wobei in Figur 3 ein zweiter Leiter L2 und in Figur 4 ein erster Leiter L1 gegriffen ist.

Ist wie in Figur 3 der zweite Leiter L2 von der Greifvorrichtung 1 gegriffen und der erste Leiter L1 durch die Verschiebung der ersten Greifbacke 11 in seine zweite Greifbackenposition nicht gegriffen, kann an dem zweiten Leiter L2 ein Prüfverfahren zur Prüfung einer Steckverbindung durchgeführt werden. Dabei wird die Greifvorrichtung 1 mit einer vorbestimmten Prüfkraft in einer Streckbewegung bzw. Zugbewegung von der Steckverbindung weggeführt und der dabei entstehende Zugkraftverlauf an dem zweiten Leiter L2 mit einem Kraftmomentensensor an der Greifvorrichtung 1 bestimmt. Die bei der Streckbewegung zurück gelegte Strecke ist sehr klein oder kann abhängig von der Prüfkraft null sein, so dass keine Strecke zurück gelegt wird. Der erfasste Zugkraftverlauf wird allein durch den zweiten Leiter L2 bestimmt und ist von dem ersten Leiter L1 unabhängig, so dass tatsächlich nur die Steckverbindung des zweiten Leiters L2 geprüft wird.

Zur Prüfung der Steckverbindung des ersten Leiters L1 wird anschließend der erste Leiter L1 durch Verschiebung der ersten Greifbacke 11 auf ihre erste Greifbackenposition gegriffen und der Griff von dem zweiten Leiter L2

durch Verschieben der zweiten Greifbacke 12 in ihre zweite Greifbackenposition gelöst. Ist, wie in Figur 4 gezeigt, nur noch der erste Leiter L1 von der Greifvorrichtung 1 gegriffen, kann das Prüfverfahren für den ersten Leiter L1 wiederholt werden.

## Patentansprüche

1. Greifvorrichtung (1) zum voneinander unabhängigen Greifen zweier benachbarter Leiter (L1, L2), wobei
die Greifvorrichtung (1) eine erste und eine zweite Greifbacke (11, 12) sowie eine Mittelbacke (13) aufweist, die sich zwischen der ersten und zweiten Greifbacke (11, 12) stegförmig entlang einer Längsachse (L) erstreckt,
die erste Greifbacke (11) einen zu der Mittelbacke (13) weisenden ersten Greifabschnitt (111) und die Mittelbacke (13) einen zu der ersten Greifbacke (11) weisenden ersten Gegenhalteabschnitt (131) ausbilden, die einander gegenüberliegen und die ausgebildet sind, gemeinsam durch eine Verschiebbarkeit der ersten Greifbacke (11) einen ersten Leiter (L1) der zwei Leiter (L1, L2) zu greifen und
die zweite Greifbacke (12) einen zu der Mittelbacke (13) weisenden zweiten Greifabschnitt (122) und die Mittelbacke (13) einen zu der zweiten Greifbacke (12) weisenden zweiten Gegenhalteabschnitt (132) ausbilden, die einander gegenüberliegen und die ausgebildet sind, gemeinsam durch eine Verschiebbarkeit der zweiten Greifbacke (12) einen zweiten Leiter (L2) der zwei Leiter (L1, L2) zu greifen
wobei die erste und die zweite Greifbacke (11, 12) jeweils unabhängig von der jeweils anderen Greifbacke (11, 12) entlang einer zu der Längsachse (L) orthogonalen Querachse (Q) und entlang der Querachse (Q) von der Mittelbacke (13) weg oder auf die Mittelbacke (13) zu verschiebbar sind und
wobei die Greifvorrichtung einen ersten Aktor (115) und einen zweiten Aktor (125) umfasst, wobei
der erste Aktor (115) mit der ersten Greifbacke (11) verbunden und ausgebildet ist, die erste Greifbacke (11) entlang der Querachse (Q) zu verschieben und
der zweite Aktor (125) mit der zweiten Greifbacke (12) verbunden und ausgebildet ist, die zweite Greifbacke (12) entlang der Querachse (Q) zu verschieben.

2. Greifvorrichtung (1) nach dem vorhergehenden Anspruch, wobei
die zwei Leiter (L1, L2) zumindest abschnittsweise insbesondere durch eine Verdrillung miteinander verbunden sind und die Greifvorrichtung (1) durch die erste und die zweite Greifbacke (11, 12) sowie die dazwischen angeordnete Mittelbacke (13) ausgebildet ist, die miteinander verbundenen Leiter (L1, L2) unabhängig voneinander zu greifen und mit der Greifvorrichtung (1) unabhängig voneinander zu bewegen.

3. Greifvorrichtung nach einem der vorhergehenden Ansprüche, wobei
der erste Greifabschnitt (111) und der erste Gegenhalteabschnitt (131) jeweils eine Ausnehmung mit einer teilkreis- oder bogenförmigen Außenkontur aufweisen und die teilkreis- oder bogenförmigen Ausnehmungen des ersten Greifabschnitts (111) und des ersten Gegenhalteabschnitts (131) gemeinsam eine zu dem ersten Leiter (L1) korrespondierende erste Aufnahmeausnehmung bilden und
der zweite Greifabschnitt (122) und der zweite Gegenhalteabschnitt (132) jeweils eine Ausnehmung mit einer teilkreis- oder bogenförmigen Außenkontur aufweisen und die teilkreis- oder bogenförmigen Ausnehmungen des zweiten Greifabschnitts (122) und des zweiten Gegenhalteabschnitts (132) gemeinsam eine zu dem zweiten Leiter (L2) korrespondierende zweite Aufnahmeausnehmung bilden.

4. Greifvorrichtung nach dem vorhergehenden Anspruch, wobei
die erste Aufnahmeausnehmung und die zweite Aufnahmeausnehmung jeweils auf einer entlang der Längsachse (L) von der ersten und zweiten Greifbacke (11, 12) sowie von der Mittelbacke (13) weg weisenden Seite geöffnet ist.

5. Greifvorrichtung nach einem der vorhergehenden Ansprüche, wobei
die erste Greifbacke (11) an dem ersten Greifabschnitt (111) eine erste Leiter-Einführhilfe aufweist,
die zweite Greifbacke (12) an dem zweiten Greifabschnitt (122) eine zweite Leiter-Einführhilfe aufweist und
die Mittelbacke (13) an dem ersten und dem zweiten Gegenhalteabschnitt (131, 132) eine mittlere Leiter-Einführhilfe aufweist, wobei
die erste, die zweite und die mittlere Leiter-Einführhilfe jeweils als ein sich zu der Längsachse (L) parallel erstreckender, sich entlang der Längsachse (L) verjüngender keilförmiger Vorsprung ausgebildet ist.

6. Greifvorrichtung nach dem vorhergehenden Anspruch und einem der Ansprüche 3 oder 4, wobei
die erste Leiter-Einführhilfe und die mittlere Leiter-Einführhilfe jeweils eine zu der ersten Aufnahmeausnehmung führende und gegenüber der Längsachse (L) schräge Führungsfläche aufweist und
die zweite Leiter-Einführhilfe und die mittlere Leiter-Einführhilfe jeweils eine zu der zweiten Aufnahmeausnehmung führende und gegenüber der Längsachse (L) schräge Führungsfläche aufweist.

7. Greifvorrichtung nach einem der vorhergehenden Ansprüche, wobei
die erste Greifbacke (11) und die zweite Greifbacke (12) jeweils mehrteilig aus einem Greifeinsatz (113, 123) mit dem jeweiligen Greifabschnitt und einer Einsatzaufnahme (114, 124) ausgebildet ist.

8. Greifvorrichtung nach Anspruch 1, ferner umfassend
eine Anbindungsplatte (31) zur Befestigung der Greifvorrichtung (1) an einem Handhabungsgerät und
eine an der Anbindungsplatte (31) fixierte Aufnahmevorrichtung, an welchem der erste und der zweite Aktor (115, 125) sowie die Mittelbacke (13) fixiert sind.

9. Greifvorrichtung nach einem der vorhergehenden Ansprüche, ferner umfassend
einen Kraftmomentensensor zur Bestimmung von an den ersten und zweiten Greifbacken (11, 12) sowie an dem Mittelbacke (13) angreifenden Kräften und Momenten, die über einen gegriffenen Leiter (L1, L2) oder beide gegriffene Leiter (L1, L2) durch eine Bewegung der Greifvorrichtung (1) auf die Greifvorrichtung (1) wirken, wobei
der Kraftmomentensensor an der Greifvorrichtung (1) fixiert ist.

10. Verfahren zum Prüfen einer Steckverbindung zwischen zwei Leitern (L1, L2) und einem jeweiligen in einem Kontaktträger montierten Kontaktelement mit einer Greifvorrichtung (1) nach Anspruch 9, wobei
die zwei Leiter (L1, L2) entlang einer gemeinsamen Längsrichtung drei Abschnitte aufweisen, einen ersten Abschnitt, in welchem die zwei Leiter (L1, L2) parallel und quer zu ihrer Längserstreckung beabstandet zueinander angeordnet sind und jeweils in eine je einem Kontaktelement zugeordneten Kontaktkammer eingesteckt sind, einen dritten Abschnitt, in welchem die zwei Leiter (L1, L2) miteinander und benachbart zueinander angeordnet sind, und einen zweiten, zwischen dem ersten und dem dritten Abschnitt liegenden Abschnitt,
die Greifvorrichtung (1) mit der Mittelbacke (13) zwischen die zwei Leiter (L1, L2) geführt wird,
einer der zwei Leiter (L1, L2) von der ersten oder zweiten Greifbacke (11, 12) und der Mittelbacke (13) der Greifvorrichtung (1) in dem zweiten oder dritten Abschnitt gegriffen wird,
die Greifvorrichtung (1) mit dem gegriffenen Leiter (L1, L2) in einer geradlinigen Streckbewegung mit einer vorbestimmten Kraft entlang einer vorbestimmten Strecke oder in eine vorbestimmte Richtung von dem ersten Abschnitt der Leiter (L1, L2) weg bewegt wird,
ein Zugkraftverlauf einer entlang des gegriffenen Leiters (L1, L2) wirkenden Zugkraft während der Streckbewegung an der Greifvorrichtung (1) mit dem Kraftmomentensensor gemessen wird und
aus einem Messwert des an der Greifvorrichtung (1) gemessenen Zugkraftverlaufs bestimmt wird, ob der Leiter (L1, L2) mit einer vorbestimmten Haltekraft mit dem jeweiligen Kontaktelement verbunden ist und/oder ob das zugehörige Kontaktelement mit einer vorbestimmten Montagekraft in dem Kontaktträger montiert ist.

11. Verfahren nach dem vorhergehenden Anspruch, wobei
die zwei Leiter (L1, L2) zumindest abschnittsweise und insbesondere durch eine Verdrillung miteinander verbunden sind und die zwei Leiter in dem dritten Abschnitt miteinander verbunden und in dem ersten und zweiten Abschnitt voneinander gelöst sind.

## Claims

1. A gripping device (1) for gripping two adjacent conductors (L1, L2) independently of each other, wherein
the gripping device (1) has a first and a second gripping jaw (11, 12) as well as a central jaw (13) which extends between the first and second gripping jaws (11, 12) in a web-shaped manner along a longitudinal axis (L),
the first gripping jaw (11) configures a first gripping portion (111) facing the central jaw (13) and the central jaw (13) configures a first counter-holding portion (131) facing the first gripping jaw (11), which are opposite each other and which are configured to grip jointly, by a displaceability of the first gripping jaw (11), a first conductor (L1) of the two conductors (L1, L2), and
the second gripping jaw (12) configures a second gripping portion (122) facing the central jaw (13) and the central jaw (13) configures a second counter-holding portion (132) facing the second gripping jaw (12), which are opposite each other and which are configured to grip jointly, by a displaceability of the second gripping jaw (12), a second conductor (L2) of the two conductors (L1, L2),
wherein the first and second gripping jaws (11, 12) are each displaceable independently of the respective other gripping jaw (11, 12) along a transverse axis (Q) orthogonal to the longitudinal axis (L) and along the transverse axis (Q) away from the central jaw (13) or towards the central jaw (13), and
wherein the gripping device comprises a first actuator (115) and a second actuator (125), wherein
the first actuator (115) is connected to the first gripping jaw (11) and configured to displace the first gripping jaw (11) along the transverse axis (Q), and
the second actuator (125) is connected to the second gripping jaw (12) and configured to displace the second gripping jaw (12) along the transverse axis (Q).

2. The gripping device (1) according to the preceding claim, wherein
the two conductors (L1, L2) are connected to each other at least in portions, in particular by twisting, and the gripping device (1) is configured by the first and second gripping jaws (11, 12) as well as the central jaw (13) arranged therebetween to grip the conductors (L1, L2) connected to each other independently of each other and to move them independently of each other with the gripping device (1).

3. The gripping device according to any one of the preceding claims, wherein the first gripping portion (111) and the first counter-holding portion (131) each have a recess with a partly-circular or arc-shaped outer contour and the partly-circular or arc-shaped recesses of the first gripping portion (111) and of the first counter-holding portion (131) jointly form a first receptacle recess corresponding to the first conductor (L1), and
the second gripping portion (122) and the second counter-holding portion (132) each have a recess with a partly-circular or arc-shaped outer contour and the partly-circular or arc-shaped recesses of the second gripping portion (122) and of the second counter-holding portion (132) jointly form a second receptacle recess corresponding to the second conductor (L2).

4. The gripping device according to the preceding claim, wherein
the first receptacle recess and the second receptacle recess are each open on a side facing away from the first and second gripping jaws (11, 12) as well as from the central jaw (13) along the longitudinal axis (L).

5. The gripping device according to any one of the preceding claims, wherein the first gripping jaw (11) has a first conductor insertion aid on the first gripping portion (111),
the second gripping jaw (12) has a second conductor insertion aid on the second gripping portion (122) and
the central jaw (13) has a central conductor insertion aid on the first and second counter-holding portions (131, 132), wherein
the first, second and central conductor insertion aids are each configured as a wedge-shaped projection extending parallel to the longitudinal axis (L) and tapering along the longitudinal axis (L).

6. The gripping device according to the preceding claim and any one of claims 3 or 4, wherein
the first conductor insertion aid and the central conductor insertion aid each have a guide surface leading to the first receptacle recess and inclined with respect to the longitudinal axis (L), and
the second conductor insertion aid and the central conductor insertion aid each have a guide surface leading to the second receptacle recess and inclined with respect to the longitudinal axis (L).

7. The gripping device according to any one of the preceding claims, wherein the first gripping jaw (11) and the second gripping jaw (12) are each configured in multiple parts from a gripping insert (113, 123) with the respective gripping portion and an insert receptacle (114, 124).

8. The gripping device according to claim 1, further comprising
a linking plate (31) for attaching the gripping device (1) to a handling apparatus and a receptacle device fixed to the linking plate (31), to which the first and second actuators (115, 125) as well as the central jaw (13) are fixed.

9. The gripping device according to any one of the preceding claims, further comprising
a force moment sensor for determining forces and moments affecting the first and second gripping jaws (11, 12) as well as the central jaw (13), which act upon the gripping device (1) via a gripped conductor (L1, L2) or both gripped conductors (L1, L2) by a movement of the gripping device (1), wherein
the force moment sensor is fixed to the gripping device (1).

10. A method for testing a plug connection between two conductors (L1, L2) and a respective contact element mounted in a contact carrier with a gripping device (1) according to claim 9, wherein
the two conductors (L1, L2) have three portions along a common longitudinal direction, a first portion in which the two conductors (L1, L2) are arranged in parallel and spaced apart from each other transversely to their longitudinal extent and are each plugged into a contact chamber associated with a contact element, a third section in which the two conductors (L1, L2) are arranged with each other and adjacent to each other and a second portion lying between the first and third portions,
the gripping device (1) with the central jaw (13) is guided between the two conductors (L1, L2),
one of the two conductors (L1, L2) is gripped by the first or second gripping jaw (11, 12) and the central jaw (13) of the gripping device (1) in the second or third portion, the gripping device (1) with the gripped conductor (L1, L2) is moved in a linear stretching movement with a predetermined force along a predetermined stretch or in a predetermined direction away from the first portion of the conductors (L1, L2),
a tensile force profile of a tensile force acting along the gripped conductor (L1, L2) is measured with the force moment sensor at the gripping device (1) during the stretching movement and
from a measurement value of the tensile force curve measured at the gripping device (1), it is determined whether the conductor (L1, L2) is connected to the respective contact element with a predetermined holding force and/or whether the associated contact element is mounted in the contact carrier with a predetermined mounting force.

11. The method according to the preceding claim, wherein
the two conductors (L1, L2) are connected to each other at least in portions and in particular by twisting, and the two conductors are connected to each other in the third portion and detached from each other in the first and second sections.

## Revendications

1. Dispositif de préhension (1) permettant de saisir deux conducteurs (L1, L2) adjacents l'un indépendamment de l'autre, dans lequel
le dispositif de préhension (1) présente un premier et un deuxième mors de préhension (11, 12) ainsi qu'un mors central (13) qui s'étend entre le premier et le deuxième mors de préhension (11, 12) en forme de traverse le long d'un axe longitudinal (L),
le premier mors de préhension (11) forme une première section de préhension (111) orientée vers le mors central (13) et le mors central (13) forme une première section de contre-appui (131) orientée vers le premier mors de préhension (11), lesquelles sont opposées l'une à l'autre et sont configurées pour saisir ensemble, par une aptitude au coulissement du premier mors de préhension (11), un premier conducteur (L1) des deux conducteurs (L1, L2), et
le deuxième mors de préhension (12) par une aptitude au coulissement du deuxième mors de préhension (12), un deuxième conducteur (L2) des deux conducteurs (L1, L2),
dans lequel
le premier et le deuxième mors de préhension (11, 12) sont aptes à coulisser chacun indépendamment de l'autre mors de préhension (11, 12) respectif le long d'un axe transversal (Q) orthogonal à l'axe longitudinal (L) et le long de l'axe transversal (Q) en s'éloignant du mors central (13) ou en se rapprochant du mors central (13), et
dans lequel le dispositif de préhension comprend un premier actionneur (115) et un deuxième actionneur (125), dans lequel
le premier actionneur (115) est relié au premier mors de préhension (11) et est configuré pour faire coulisser le premier mors de préhension (11) le long de l'axe transversal (Q), et
le deuxième actionneur (125) est relié au deuxième mors de préhension (12) et est configuré pour faire coulisser le deuxième mors de préhension (12) le long de l'axe transversal (Q).

2. Dispositif de préhension (1) selon la revendication précédente, dans lequel les deux conducteurs (L1, L2) sont reliés l'un à l'autre au moins par sections, en particulier par une torsion, et le dispositif de préhension (1) est configuré, par le premier et le deuxième mors de préhension (11, 12) ainsi que par le mors central (13) disposé entre ceux-ci, pour saisir les conducteurs (L1, L2) reliés l'un à l'autre indépendamment l'un de l'autre et pour les déplacer indépendamment l'un de l'autre avec le dispositif de préhension (1).

3. Dispositif de préhension selon l'une des revendications précédentes, dans lequel
la première section de préhension (111) et la première section de contre-appui (131) présentent chacune un évidement doté d'un contour extérieur en forme d'arc de cercle ou d'arc, et les évidements en forme d'arc de cercle ou d'arc de la première section de préhension (111) et de la première section de contre-appui (131) forment ensemble un premier évidement de réception correspondant au premier conducteur (L1), et
la deuxième section de préhension (122) et la deuxième section de contre-appui (132) présentent chacune un évidement doté d'un contour extérieur en forme d'arc de cercle ou d'arc, et les évidements en forme d'arc de cercle ou d'arc de la deuxième section de préhension (122) et de la deuxième section de contre-appui (132) forment ensemble un deuxième évidement de réception correspondant au deuxième conducteur (L2).

4. Dispositif de préhension selon la revendication précédente, dans lequel
le premier évidement de réception et le deuxième évidement de réception sont chacun ouverts sur un côté orienté, le long de l'axe longitudinal (L), à l'opposé du premier et du deuxième mors de préhension (11, 12) ainsi qu'à l'opposé du mors central (13).

5. Dispositif de préhension selon l'une des revendications précédentes, dans lequel
le premier mors de préhension (11) présente sur la première section de préhension (111) une première aide à l'insertion de conducteur,
le deuxième mors de préhension (12) présente sur la deuxième section de préhension (122) une deuxième aide à l'insertion de conducteur, et
le mors central (13) présente sur la première et la deuxième section de contre-appui (131, 132) une aide à l'insertion de conducteur centrale, dans lequel
la première, la deuxième et l'aide à l'insertion de conducteur centrale sont chacun configurés sous la forme d'une saillie cunéiforme s'étendant parallèlement à l'axe longitudinal (L) et s'amincissant le long de l'axe longitudinal (L).

6. Dispositif de préhension selon la revendication précédente et l'une des revendications 3 ou 4, dans lequel
la première aide à l'insertion de conducteur et l'aide à l'insertion de conducteur centrale présentent chacune une surface de guidage menant au premier évidement de réception et oblique par rapport à l'axe longitudinal (L), et
la deuxième aide à l'insertion de conducteur et l'aide à l'insertion de conducteur centrale présentent chacune une surface de guidage menant au deuxième évidement de réception et oblique par rapport à l'axe longitudinal (L).

7. Dispositif de préhension selon l'une des revendications précédentes, dans lequel
le premier mors de préhension (11) et le deuxième mors de préhension (12) sont chacun constitués de plusieurs parties formées d'un insert de préhension (113, 123) doté de la section de préhension respective et d'un logement d'insert (114, 124).

8. Dispositif de préhension selon la revendication 1, comprenant en outre
une plaque de raccordement (31) pour la fixation du dispositif de préhension (1) à un appareil de manipulation, et
un dispositif de réception fixé sur la plaque de raccordement (31), sur lequel sont fixés le premier et le deuxième actionneur (115, 125) ainsi que le mors central (13).

9. Dispositif de préhension selon l'une des revendications précédentes, comprenant en outre
un capteur de force et de couple pour la détermination de forces et de couples s'exerçant sur les premier et deuxième mors de préhension (11, 12) ainsi que sur le mors central (13), lesquels agissent sur le dispositif de préhension (1) par l'intermédiaire d'un conducteur (L1, L2) saisi ou des deux conducteurs (L1, L2) saisis par un mouvement du dispositif de préhension (1), dans lequel
le capteur de force et de couple est fixé sur le dispositif de préhension (1).

10. Procédé de contrôle d'une connexion enfichable entre deux conducteurs (L1, L2) et un élément de contact respectif monté dans un porte-contacts avec un dispositif de préhension (1) selon la revendication 9, dans lequel
les deux conducteurs (L1, L2) présentent trois sections le long d'une direction longitudinal commune, une première section dans laquelle les deux conducteurs (L1, L2) sont disposés parallèlement et à distance l'un de l'autre transversalement à leur étendue longitudinale et sont chacun enfichés dans une chambre de contact associée à chaque fois à un élément de contact, une troisième section dans laquelle les deux conducteurs (L1, L2) sont disposés l'un avec l'autre et de manière adjacente l'un à l'autre, et une deuxième section située entre la première et la troisième section,
le dispositif de préhension (1) est guidé avec le mors central (13) entre les deux conducteurs (L1, L2),
l'un des deux conducteurs (L1, L2) est saisi par le premier ou le deuxième mors de préhension (11, 12) et le mors central (13) du dispositif de préhension (1) dans la deuxième ou la troisième section,
le dispositif de préhension (1) avec le conducteur (L1, L2) saisi est déplacé dans un mouvement d'extension rectiligne avec une force prédéterminée le long d'une distance prédéterminée ou dans une direction prédéterminée en s'éloignant de la première section des conducteurs (L1, L2),
une courbe de force de traction d'une force de traction agissant le long du conducteur (L1, L2) saisi est mesurée pendant le mouvement d'extension au niveau du dispositif de préhension (1) avec le capteur de force et de couple et
**il** est déterminé, à partir d'une valeur de mesure de la courbe de force de traction mesurée au niveau du dispositif de préhension (1), si le conducteur (L1, L2) est relié à l'élément de contact respectif avec une force de maintien prédéterminée et/ou si l'élément de contact associé est monté dans le porte-contacts avec une force de montage prédéterminée.

11. Procédé selon la revendication précédente, dans lequel
les deux conducteurs (L1, L2) sont reliés l'un à l'autre au moins par sections et en particulier par une torsion, et les deux conducteurs sont reliés l'un à l'autre dans la troisième section et sont détachés l'un de l'autre dans la première et la deuxième section.
